(19)

Europäisches
Patentamt
European
Patent Office
Office européen
des brevets

(11) **EP 4 549 986 A1**

(12) **EUROPEAN PATENT APPLICATION**
published in accordance with Art. 153(4) EPC

(43) Date of publication:
**07.05.2025 Bulletin 2025/19**

(21) Application number: **22954137.0**

(22) Date of filing: **01.08.2022**

(51) International Patent Classification (IPC):
**G01S 1/48** $^{(2006.01)}$      **H04B 7/04** $^{(2017.01)}$
**G01S 3/02** $^{(2006.01)}$

(52) Cooperative Patent Classification (CPC):
**G01S 1/48;** G01S 3/02; H04B 7/04

(86) International application number:
**PCT/SG2022/050546**

(87) International publication number:
**WO 2024/030070 (08.02.2024 Gazette 2024/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **WANG, Wei
Singapore 138589 (SG)**
• **ZHANG, Heng
Singapore 138589 (SG)**

(74) Representative: **Maiwald GmbH
Engineering
Elisenhof
Elisenstrasse 3
80335 München (DE)**

(54) **ANGLE DETERMINING METHOD AND APPARATUS**

(57) Embodiments of this application provide an angle determining method and apparatus. The method includes: A receiving device receives a first multi-tone signal, where the first multi-tone signal includes N1 frequencies, and N1 is an integer greater than or equal to 2; the receiving device performs phase measurement on the first multi-tone signal, and obtains first phase values that correspond to k antennas of a first device and that are at the N1 frequencies; and the receiving device determines an angle of a signal of the first device based on the obtained first phase values. The method disclosed in this application can implement fast and high-precision angle measurement.

400

```
┌──────────┐                          ┌──────────┐
│ Sending  │                          │Receiving │
│ device   │                          │ device   │
└──────────┘                          └──────────┘
```

S410: Generate a first multi-tone signal, where the first multi-tone signal includes N1 frequencies, and N1 is an integer greater than or equal to 2

S420: Send the first multi-tone signal

S430: Perform phase measurement on the first multi-tone signal

S440: Obtain first phase values that correspond to k antennas of a first device and that are at the N1 frequencies

S450: Determine an angle of a signal of the first device based on the obtained first phase values

FIG. 4

**Description**

**TECHNICAL FIELD**

This application relates to the communication field, and more specifically, to an angle determining method and apparatus.

**BACKGROUND**

Currently, a positioning technology has a wide range of application scenarios and huge business values. A global navigation satellite system (global navigation satellite system, GNSS) may provide high-precision outdoor location information; and a Wi-Fi positioning technology based on a received signal strength indicator (received signal strength indicator, RSSI) and a Bluetooth positioning technology based on a beacon (beacon) may provide indoor location information. Currently, the Bluetooth Special Interest Group (Bluetooth SIG) supports a Bluetooth protocol of an angle of arrival (angle of arrival, AoA) and an angle of departure (angle of departure, AoD), and indoor positioning precision is improved based on direction information of a Bluetooth low energy (Bluetooth low energy, BLE) signal.

However, in an actual indoor environment, due to impact of multipath reflection, a phase difference fluctuates with a channel. As a result, angles calculated for channels are not totally the same. In addition, due to a limitation of the Bluetooth protocol, phase information of only one frequency can be measured in one time of AoA/AoD angle measurement. Consequently, final angle measurement precision is low and measurement time is excessively long.

Therefore, how to implement fast and high-precision angle measurement is an urgent problem to be resolved.

**SUMMARY**

This application provides an angle determining method and apparatus, to implement fast and high-precision angle measurement.

According to a first aspect, an angle determining method is provided. The method may be performed by a receiving device, or may be performed by a chip or a circuit configured for the receiving device. This is not limited in this application. For ease of description, the following uses an example in which the receiving device performs the method for description.

The method includes: The receiving device receives a first multi-tone signal, where the first multi-tone signal includes N1 frequencies, and N1 is an integer greater than or equal to 2; the receiving device performs phase measurement on the first multi-tone signal, and obtains first phase values that correspond to k antennas of a first device and that are at the N1 frequencies, where k is an integer greater than or equal to 2; and the receiving device determines an angle of a signal of the first device based on the obtained first phase values.

It should be understood that the first phase values may be considered as a phase matrix with k columns and N1 rows, and a quantity of phase values in the phase matrix may be greater than or equal to 2 and less than or equal to k multiplied by N1. Certainly, there may be a case in which no phase value is collected by an antenna at a frequency or a phase value error is large in an angle measurement process of the first multi-tone signal due to interference of another signal. This is not specifically limited in this application.

According to the solution provided in this application, the multi-tone signal is received, phase measurement is performed on the multi-tone signal, and the angle of the signal of the first device is determined based on the obtained measurement values. In comparison with conventional phase measurement based on a monophonic signal, in phase measurement in which a multi-tone signal is used to determine the angle, the phase values can be quickly obtained, measurement efficiency can be improved, and fast angle measurement can be implemented.

With reference to the first aspect, in some implementations of the first aspect, when the first device is the receiving device, the angle of the signal of the first device is an angle of arrival of the receiving device; or when the first device is a sending device, the angle of the signal of the first device is an angle of departure of the sending device.

With reference to the first aspect, in some implementations of the first aspect, the receiving device includes a radio frequency local oscillator RF LO, and that the receiving device performs down-conversion processing on a first radio frequency multi-tone signal to obtain a first baseband multi-tone signal includes: The receiving device performs frequency mixing on the first radio frequency multi-tone signal and a signal of the RF LO, to obtain the first baseband multi-tone signal.

It should be noted that, in this implementation, the first radio frequency multi-tone signal is the first multi-tone signal. For example, when the angle of arrival of the signal is determined, a phase difference between radio frequency signals of two antennas needs to be measured. Considering that a frequency of the radio frequency signal changes excessively fast, it is difficult to directly measure a phase of the radio frequency signal. Therefore, in an engineering implementation, the radio frequency signal is down-converted to a baseband signal with a low frequency, and then the phase of the radio frequency signal is indirectly obtained by performing phase measurement on the baseband signal. A phase of the RF LO affects a phase value of the baseband signal during down-conversion processing. However, because the RF LO has same impact on phases of the k antennas, when a phase difference between the k antennas is calculated, the impact of the RF LO on the phase may be canceled.

With reference to the first aspect, in some implementations of the first aspect, the receiving device includes N1 digital LOs, and the N1 digital LOs are in a one-to-one correspondence with the N1 frequencies. That the receiving device performs phase measurement on the first multi-tone signal, and obtains first phase values that correspond to k antennas of a first device and that are at the N1 frequencies includes: An $i^{th}$ digital LO of the receiving device performs digital down-conversion processing on the first multi-tone signal, performs IQ averaging processing on the first multi-tone signal obtained through digital down-conversion, and obtains first phase values that correspond to the k antennas of the first device and that are at an $i^{th}$ frequency, where i is an integer greater than or equal to 1 and less than or equal to N1.

In this implementation, the receiving device obtains an average IQ of a frequency signal at an antenna by using an IQ averaging method (IQs of other frequencies are canceled), and may calculate a phase value of the frequency signal at the antenna based on the average IQ. Similarly, a phase value of the frequency signal at another antenna can be obtained, and then a phase difference of the frequency signal between the two antennas can be obtained for calculating an angle of arrival. It should be understood that the foregoing process is applicable to processing of all other frequency signals.

With reference to the first aspect, in some implementations of the first aspect, that the receiving device determines an angle of a signal of the first device based on the obtained first phase values includes: The receiving device determines the angle of the signal of the first device based on a difference between a phase value that corresponds to a first antenna and that is at the $i^{th}$ frequency and a phase value that corresponds to a second antenna and that is at the $i^{th}$ frequency. The first antenna and the second antenna are any two different antennas in the k antennas, and i is an integer greater than or equal to 1 and less than or equal to N1.

With reference to the first aspect, in some implementations of the first aspect, any two adjacent frequencies in the N1 frequencies have a same frequency separation.

Optionally, any two adjacent frequencies in the N1 frequencies of the first multi-tone signal may alternatively have different frequency separations. This is not specifically limited thereto.

With reference to the first aspect, in some implementations of the first aspect, the RF LO and the plurality of digital LOs of the receiving device keep are not out of lock.

In other words, in this implementation, phase values corresponding to different frequencies of antennas need to be obtained by switching the antennas. To avoid an extra phase introduced by the LO (including the RF LO and the digital LO), in an antenna switching process, for example, when the angle of arrival of the signal is measured, the RF LO and the plurality of digital LOs of the receiving device keep rotating, and the plurality of digital LOs and the RF LO of the sending device also need to keep rotating, that is, send a multi-tone signal continuously.

With reference to the first aspect, in some implementations of the first aspect, the receiving device receives a second multi-tone signal. The second multi-tone signal includes N2 frequencies, there are M common frequencies between the N2 frequencies and N1 frequencies, N2 is an integer greater than or equal to 2, and M is an integer greater than or equal to 1 and less than a minimum value of N1 and N2.

With reference to the first aspect, in some implementations of the first aspect, the receiving device performs phase measurement on the second multi-tone signal, and obtains second phase values that correspond to the k antennas of the first device and that are at the N2 frequencies. The receiving device determines the angle of the signal of the first device based on the obtained second phase values; or the receiving device determines the angle of the signal of the first device based on the obtained first phase values and the obtained second phase values.

With reference to the first aspect, in some implementations of the first aspect, that the receiving device determines the angle of the signal of the first device based on the obtained first phase values and the obtained second phase values includes: The receiving device determines a phase compensation value based on the obtained first phase values and the obtained second phase values; the receiving device compensates the first phase values based on the phase compensation value; and the receiving device determines the angle of the signal of the first device based on the first phase values obtained through compensation and the second phase values.

Optionally, that the receiving device determines the angle of the signal of the first device based on the obtained first phase values and the obtained second phase values includes: The receiving device determines a phase compensation value based on the obtained first phase values and the obtained second phase values; the receiving device compensates the second phase values based on the phase compensation value; and the receiving device determines the angle of the signal of the first device based on the second phase values obtained through compensation and the first phase values.

Because multipath reflection exists in actual measurement of a signal, different frequencies (or different channels) have different frequency responses. For example, change amplitude of a phase difference with a channel is far greater than 3% in an ideal environment. That is, each path measured in a multipath environment has a corresponding AoA/AoD, but an AoA/AoD corresponding to a line-of-sight (line-of-sight, LOS) signal is the most accurate. A larger frequency bandwidth may be obtained as much as possible through combination of the foregoing phase values, which is helpful for parsing time of flight of a multipath signal, and therefore, LOS and a corresponding angle estimation value may be determined. In this implementation, angle measurement precision can be improved.

It should be noted that, when the phase values corresponding to the first multi-tone signal and the second multi-tone signal are combined, initial phases of the RF LO in the two measurement processes may be any values, and a difference between the initial phases of the RF LO in the two times of angle measurement is calculated by using a method of sharing a frequency (or channel), so that the initial phase value of the RF LO can be compensated. Therefore, impact on an angle measurement result of a signal, such as an error, can be avoided or reduced.

With reference to the first aspect, in some implementations of the first aspect, a time interval between a sending moment of the first multi-tone signal and a sending moment of the second multi-tone signal is the same as a time interval between a receiving moment of the first multi-tone signal and a receiving moment of the second multi-tone signal.

Based on this implementation, time of flight of the signal can remain unchanged in an entire measurement process, to avoid introducing an unnecessary error.

With reference to the first aspect, in some implementations of the first aspect, initial phases of the N1 digital LOs are the same when they are started, and initial phases of the $i^{th}$ digital LO at a first moment and a second moment are the same. The first moment is the sending moment of the first multi-tone signal, and the second moment is the sending moment of the second multi-tone signal; or the first moment is the receiving moment of the first multi-tone signal, and the second moment is the receiving moment of the second multi-tone signal.

Based on this implementation, it is ensured that initial phases of the plurality of digital LOs of the sending device are the same when the plurality of digital LOs are started, and initial phase values of a same digital LO need to be the same in angle measurement processes. Similarly, initial phases of the plurality of digital LOs of the receiving device are the same when the plurality of digital LOs are started, and initial phase values of a same digital LO need to be the same in each angle measurement process. This avoids introducing an additional phase error, and can improve angle measurement precision.

According to a second aspect, an angle determining method is provided. The method may be performed by a sending device, or may be performed by a chip or a circuit configured for the sending device. This is not limited in this application. For ease of description, the following uses an example in which the sending device performs the method for description.

The method includes: The sending device generates a first multi-tone signal, where the first multi-tone signal includes N1 frequencies, and N1 is an integer greater than or equal to 2; and the sending device sends the first multi-tone signal, where the first multi-tone signal is used to determine an angle of a signal of a first device.

According to the solution provided in this application, the multi-tone signal is sent, so that a receiving device performs phase measurement on the multi-tone signal, and determines the angle of the signal of the first device based on an obtained measurement value. In comparison with conventional phase measurement based on a monophonic signal, in phase measurement in which a multi-tone signal is used to determine the angle, phase values can be quickly obtained, measurement efficiency can be improved, and fast angle measurement can be implemented.

With reference to the second aspect, in some implementations of the second aspect, when the first device is the receiving device, the angle of the signal of the first device is an angle of arrival of the receiving device; or when the first device is the sending device, the angle of the signal of the first device is an angle of departure of the sending device.

With reference to the second aspect, in some implementations of the second aspect, the sending device includes N1 digital local oscillators LOs, and the N1 digital LOs are in a one-to-one correspondence with the N1 frequencies. That the sending device generates a first baseband multi-tone signal includes: The sending device adds signals of the N1 digital LOs to obtain the first baseband multi-tone signal.

With reference to the second aspect, in some implementations of the second aspect, the sending device further includes a radio frequency RF LO. That the sending device performs up-conversion processing on the first baseband multi-tone signal to obtain a first radio frequency multi-tone signal includes: The sending device performs frequency mixing on the first baseband multi-tone signal and a signal of the RF LO to obtain the first radio frequency multi-tone signal.

With reference to the second aspect, in some implementations of the second aspect, any two adjacent frequencies in the N1 frequencies have a same frequency separation.

With reference to the second aspect, in some implementations of the second aspect, the sending device generates a second multi-tone signal. The second multi-tone signal includes N2 frequencies, there are M common frequencies between the N2 frequencies and N1 frequencies, N2 is an integer greater than or equal to 2, and M is an integer greater than or equal to 1 and less than a minimum value of N1 and N2. The sending device sends the second multi-tone signal.

With reference to the second aspect, in some implementations of the second aspect, a time interval between a sending moment of the first multi-tone signal and a sending moment of the second multi-tone signal is the same as a time interval between a receiving moment of the first multi-tone signal and a receiving moment of the second multi-tone signal.

With reference to the second aspect, in some implementations of the second aspect, initial phases of the N1 digital LOs are the same when they are started, and initial phases of an $i^{th}$ digital LO at a first moment and a second moment are the same, where i is an integer greater than or equal to 1 and less than or equal to N1, the first moment is the sending moment of the first multi-tone signal, and the second moment is the sending moment of the second multi-tone signal; or the first time is the receiving moment of the first multi-tone signal, and the second time is the receiving moment of the second multi-tone signal.

According to a third aspect, an angle determining apparatus is provided, including: a transceiver unit, configured to receive a first multi-tone signal, where the first multi-tone signal includes N1 frequencies, and N1 is an integer greater than or equal to 2; and a processing unit, configured to perform phase measurement on the first multi-tone signal, and obtain first phase values that correspond to k antennas of a first device and that are at the N1 frequencies. The processing unit is further configured to determine an angle of a signal of the first device based on the obtained first phase values.

The transceiver unit may perform receiving and sending in the first aspect, and the processing unit may perform processing other than receiving and sending in the first aspect.

According to a fourth aspect, an angle determining apparatus is provided, including:

a processing unit, configured to generate a first multi-tone signal, where the first multi-tone signal includes N1 frequencies, and N1 is an integer greater than or equal to 2; and a sending unit, configured to send the first multi-tone signal.

The transceiver unit may perform receiving and sending in the second aspect, and the processing unit may perform processing other than receiving and sending in the second aspect.

According to a fifth aspect, an angle determining apparatus is provided, including a processor and a memory. Optionally, the apparatus may further include a transceiver. The memory is configured to store a computer program, and the processor is configured to: invoke and run the computer program stored in the memory, and control the transceiver to receive and send a signal, to enable the angle measurement apparatus to perform the method according to any possible implementation of the first aspect or the second aspect.

According to a sixth aspect, an angle determining apparatus is provided, including a processor and a communication interface. The communication interface is configured to: receive data and/or information, and transmit the received data and/or information to the processor. The processor processes the data and/or information. The communication interface is further configured to output data and/or information processed by the processor, so that the method in any possible implementation of the first aspect or the second aspect is performed.

According to a seventh aspect, a computer-readable storage medium is provided. The computer-readable storage medium stores computer instructions, and when the computer instructions are run on a computer, the method in any possible implementation of the first aspect or the second aspect is performed.

According to an eighth aspect, a computer program product is provided. The computer program product includes computer program code, and when the computer program code is run on a computer, the method in any possible implementation of the first aspect or the second aspect is performed.

According to a ninth aspect, a communication system is provided, including a sending device and a receiving device.

**BRIEF DESCRIPTION OF DRAWINGS**

FIG. 1 is a diagram of a structure of an angle of arrival positioning system applicable to this application;
FIG. 2 is a diagram of angle of arrival measurement applicable to this application;
FIG. 3 is a diagram of a structure of an angle of departure positioning system applicable to this application;
FIG. 4 is a schematic flowchart of an angle determining method according to an embodiment of this application;
FIG. 5 is a diagram of AoA angle measurement based on a conventional monophonic signal according to an embodiment of this application;
FIG. 6 is a diagram of AoA angle measurement based on a multi-tone signal according to an embodiment of this application;
FIG. 7 is a diagram of a baseband multi-tone signal according to an embodiment of this application;
FIG. 8 is a diagram of performing up-conversion processing on a baseband multi-tone signal according to an embodiment of this application;
FIG. 9 is a diagram of phase measurement of a baseband multi-tone signal according to an embodiment of this application;
FIG. 10 is a diagram of two-dimensional (a frequency dimension and an antenna dimension) energy according to an embodiment of this application;
FIG. 11 is a diagram of one-dimensional (an antenna dimension) energy according to an embodiment of this application;
FIG. 12 is a diagram of combining angle measurement values based on a multi-tone signal according to an embodiment of this application;
FIG. 13 is a diagram of a structure of an angle determining apparatus according to an embodiment of this application;

and

FIG. 14 is a diagram of a structure of another angle determining apparatus according to an embodiment of this application.

## DESCRIPTION OF EMBODIMENTS

The following describes technical solutions of this application with reference to accompanying drawings.

The technical solutions of this application may be applied to a wireless personal area network (wireless personal area network, WPAN). Currently, a standard used for the WPAN is the institute of electrical and electronics engineers (institute of electrical and electronics engineers, IEEE) 802.15 series. The WPAN may be used for communication between digital auxiliary devices in a small range, such as a telephone, a computer, and an auxiliary device. Technologies that support the wireless personal area network include Bluetooth (Bluetooth), ZigBee (ZigBee), ultra-wideband (ultra-wideband, UWB), an infrared data association (infrared data association, IrDA) connection technology, home radio frequency (home radio frequency, HomeRF), and the like. From a perspective of network composition, the WPAN is located at a bottom layer of an entire network architecture and is used for a wireless connection between devices in a small range, that is, a point-to-point short-distance connection. The WPAN may be considered as a short-distance wireless communication network. Based on different application scenarios, WPANs are further classified into a high rate (high rate, HR)-WPAN and a low rate (low rate, LR)-WPAN. The HR-WPAN may be used to support various high-rate multimedia applications, including high-quality audio and video delivery, multi-megabyte music and image document transmission, and the like. The LR-WPAN may be for common services in daily life.

In the WPAN, devices may be classified into a full-function device (full-function device, FFD) and a reduced-function device (reduced-function device, RFD) based on communication capabilities of the devices. The FFDs can communicate with each other and the FFD can communicate with the RFD. The RFDs cannot directly communicate with each other. The RFD can communicate with only the FFD or forward data through one FFD. An FFD associated with an RFD is referred to as a coordinator (coordinator) of the RFD. The RFD is mainly used for simple control application, for example, a light switch and a passive infrared sensor. A small amount of data is transmitted, and small quantities of transmission resources and communication resources are occupied. Therefore, costs of the RFD are low. The coordinator may also be referred to as a personal area network (personal area network, PAN) coordinator, a central control node, or the like. The PAN coordinator is a main control node of an entire network, and each ad hoc network can have only one PAN coordinator, which has functions of member identity management, link information management, and packet forwarding.

Optionally, a device (for example, a sending device or a receiving device) in embodiments of this application may be a device supporting the 802.15 series, for example, a device supporting a plurality of WPAN standards such as 802.15.4a, 802.15.4z, a WPAN standard under discussion, or a WPAN standard in a subsequent version.

In embodiments of this application, the device may be a communication server, a router, a switch, a bridge, a computer, a mobile phone, a home smart device, a vehicle-mounted communication device, or the like.

In embodiments of this application, the device may be a wireless communication chip, a wireless sensor, or a wireless communication terminal, for example, a user terminal, a user apparatus, an access apparatus, a subscriber station, a subscriber unit, a mobile station, a user agent, and user equipment that support a Wi-Fi communication function. The user terminal may include various handheld devices, vehicle-mounted devices, wearable devices, internet of things (internet of things, IoT) devices, or computing devices that have a wireless communication function, or another processing device connected to a wireless modem, user equipment (user equipment, UE) of various forms, a mobile station (mobile station, MS), a terminal (terminal), terminal equipment (terminal equipment), a portable communication device, a handheld device, a portable computing device, an entertainment device, a game device or system, a global positioning system device, or any other appropriate device configured to perform network communication via a wireless medium. In addition, the device supports 802.15.4ab or a next-generation standard of 802.15.4ab. The device further supports a plurality of standards, such as 802.15.4a, 802.15.4-2011, 802.15.4-2015, and 802.15.4z. The device may further support a plurality of wireless local area network (wireless local area network, WLAN) standards of the 802.11 family, for example, the 802.11ax, 802.11ac, 802.11n, 802.11g, 802.11b, 802.11a, and a next generation of the 802.11be.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that can invoke and execute a program in the FFD or the RFD.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

The technical solutions of this application are further applicable to a wireless local area network system, for example, an internet of things (internet of things, IoT) network or a vehicle-to-everything (Vehicle to X, V2X) network. It is clear that embodiments of this application may be further applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) communication system, and a future 6th generation (6th generation, 6G) communication system.

It should be understood that AoA/AoD has been applied to a low-power wireless narrowband technology, and the technical solutions provided in this application are applicable to a Bluetooth indoor positioning system. The Bluetooth indoor positioning system may be applied to an indoor navigation device. For example, a Bluetooth band is used as a navigation terminal to effectively resolve a problem that a blind person cannot quickly, safely, and conveniently reach a target place from a current location during an indoor activity, especially a travel problem in a public place, for example, a hospital, a subway station, or a shopping mall. The following uses a Bluetooth BLE AoA/AoD as an example to describe a basic principle of an AoA/AoD.

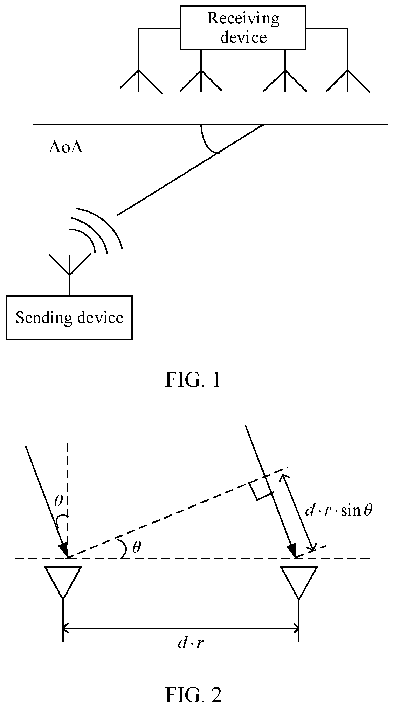

FIG. 1 is a diagram of a structure of an AoA positioning system applicable to this application. As shown in FIG. 1, a sending device and a receiving device are included. The sending device has one antenna, and the receiving device has two or more antennas (for example, four antennas).

For example, when Bluetooth BLE AoA angle measurement is performed, the sending device sends a segment of monophonic signal, that is, a special Bluetooth signal whose baseband is a sine wave, and the segment of monophonic signal is referred to as constant tone extension (constant tone extension, CTE) according to the Bluetooth protocol. In a process of receiving a CTE monophonic signal, the receiving device continuously switches between antennas, and simultaneously samples a baseband signal (including phase information) of each antenna, that is, measures a phase of a signal corresponding to each antenna. A processor in the receiving device may calculate an angle of the AoA by comparing phase differences between antennas.

Specifically, FIG. 2 is a diagram of AoA angle measurement. As shown in FIG. 2, a scenario with two antennas is used as an example. $d \cdot \lambda$ is a distance between the two antennas, and $\lambda$ is a wavelength of the CTE signal. If a signal phase difference obtained by measuring an angle between the two antennas is $\varphi$, a relationship between $\varphi$ and an incident angle $\theta$ satisfies: $\varphi = 2\pi \cdot d \cdot \sin \theta$. Then, the incident angle $\theta$, that is, a position of the sending device relative to the receiving device, may be calculated.

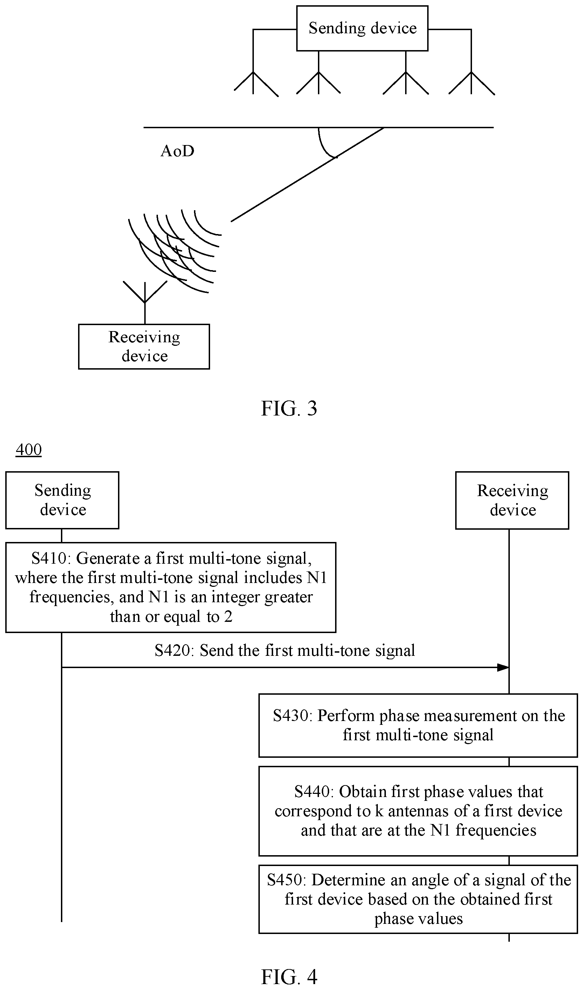

FIG. 3 is a diagram of a structure of an AoD positioning system applicable to this application. As shown in FIG. 3, a sending device and a receiving device are included. The receiving device has one antenna, and the sending device has two or more antennas (for example, four antennas).

For example, during Bluetooth BLE AoD angle measurement, the sending device sends a segment of CTE signal, and continuously switches between antennas. In a process of receiving the CTE monophonic signal, the receiving device determines a transmit antenna corresponding to each part of the CTE signal, and samples a baseband signal corresponding to each antenna. A processor in the receiving device performs angle calculation based on the baseband signal of each antenna obtained through sampling.

It should be understood that the AoA positioning system and the AoD positioning system shown in FIG. 1 and FIG. 3 are merely examples for description. This is not specifically limited in this application. The system is not limited to including more other devices, for example, another receiving device.

It should be further understood that the Bluetooth BLE has 37 channels for AoA/AoD angle measurement, and covers a 2.4 GHz industrial scientific medical band (industrial Scientific Medical band, ISM) with a bandwidth of about 80 M. A spacing between two adjacent channels is 2 MHz. It should be noted that a frequency band for a BLE AoA/AoD is 2.404 GHz to 2.478 GHz. For content of another Bluetooth BLE AoA/AoD, refer to the existing Bluetooth 5.1 protocol. For brevity, details are not described herein again.

Currently, low-power narrowband wireless technologies (such as Bluetooth and Zigbee) are increasingly widely used in daily life. Compared with other wireless technologies such as 5G and Wi-Fi, the low-power narrowband wireless technologies have the following advantages: (1) quite low power consumption, which means longer usage time of a device; and (2) a simpler design, so that device costs are lower. Therefore, the low-power narrowband wireless technologies are not only widely used in consumer devices (such as mobile phones, wearable devices, and smart household appliances), but also widely used in the industrial internet of things (industrial internet of things, IIoT). The low-power narrowband wireless technology not only has a device connection function, but also has a function of measuring a direction between devices (that is, AoA/AoD measurement), and may be used to implement device positioning. A Bluetooth AoA/AoD feature is a typical AoA/AoD protocol in the low-power narrowband wireless technology, which makes the Bluetooth AoA/AoD indoor positioning becomes increasingly popular.

It should be understood that, in an ideal environment (for example, without multipath reflection), a phase difference between AoA antennas does not change greatly with a channel. For example, a difference between a signal wavelength of a leftmost channel and a signal wavelength of a rightmost channel of the Bluetooth BLE is about 3%. Therefore, it can be learned from the foregoing formula $\varphi = 2\pi \cdot d \cdot \sin\theta$ for calculating the phase difference and the incident angle that a difference between a phase difference measured at the leftmost channel and a phase difference measured at the rightmost channel is about 3%. In addition, a larger quantity of channels (or frequencies) used for BLE AoA/AoD angle measurement indicates a larger information amount of the AoA/AoD, and a finally obtained angle estimation value should be more accurate. However, multipath reflection exists in an actual indoor environment, and consequently different channels (or different frequencies) have different frequency responses. Because the phase difference fluctuates with a channel, a phase difference between a plurality of antennas of the BLE AoA/AoD obtained through actual angle measurement varies with a channel (that is, a frequency). In other words, a change amplitude of the phase difference with the channel is far greater than a 3% change in an ideal environment. In addition, for the Bluetooth BLE AoA/AoD, each AoA/AoD signal transmission is used to measure AoA/AoD information of only one frequency. If the entire ISM frequency band needs to be measured by angle, all 37 channels of the BLE need to be measured by angle, and overall angle measurement time is long. Consequently, power consumption of the device increases, a system capacity decreases, a refresh rate of AoA/AoD angle measurement of the device is low, angle measurement of a fast-moving device is not supported, or the like.

In conclusion, compared with an AoA/AoD measurement solution in a current narrowband wireless technology, how to implement fast and accurate AoA/AoD angle measurement is an urgent technical problem to be resolved.

In view of this, this application provides an angle determining method and apparatus. A multi-tone signal is used as a reference signal for AoA/AoD measurement, and phase values obtained through measurement are combined by using a shared frequency during two adjacent times of AoA/AoD measurement. In comparison with a conventional method for performing AoA measurement based on a monophonic signal, in the method disclosed in this application, the multi-tone signal can reduce overall time for completing AoA/AoD measurement of all frequencies, to implement fast and accurate AoA/AoD measurement.

For ease of understanding of embodiments of this application, terms or technologies in this application are briefly described.

1. AoA

A data packet with a direction-finding function is sent through a single antenna, and a low energy (low energy, LE) device can make a direction available to a peer device. The peer device includes a radio frequency switch and an antenna array, and switches an antenna and obtains an IQ sample when receiving a part of the data packet. The IQ sample may be used to calculate a phase difference of radio signals received by different elements of the antenna array, to estimate an angle of arrival AoA.

2. AoD

A data packet with a direction-finding function is sent through a plurality of antennas, an antenna is switched when the data packet is sent, and an LE device can make a direction available to a peer device. The peer device includes a radio frequency switch and a single antenna, receives the data packet sent by each antenna, obtains an IQ sample, and calculates a phase difference between antennas based on IQ of each antenna, to estimate an angle of departure AoD.

3. Narrowband signal

In this application, a "narrowband signal" is relative to an "ultra-wideband signal". A bandwidth of the ultra-wideband signal is generally at least 500 MHz, and a signal whose bandwidth is less than the bandwidth of the ultra-wideband signal is the narrowband signal.

Optionally, the narrowband signal includes but is not limited to a signal provided by the following wireless technologies: a Bluetooth technology, a Zigbee technology, an 802.15.4 standard-based technology (for example, a Thread technology), a Wi-Fi technology (including various 802.11 standards), narrowband Internet of things (narrowband Internet of things, NB-IoT), long term evolution-machine to machine (long term evolution-machine to machine, LTE-M), LoRa, Sigfox, and another wireless technology in a cellular system, and another wireless technology that can provide the narrowband signal in the future. This is not limited.

4. Line-of-sight (line-of-sight, LOS)

LOS refers to that a transmit antenna and a receive antenna transmit a signal at a distance that "the transmit antenna and the receive antenna can see each other". It may be understood that there is no obstacle that affects signal transmission between the two antennas, and signals can be completely transmitted.

5. Up-conversion and down-conversion

Up-conversion means to shift a spectrum frequency of a baseband signal to a required high carrier frequency. In other words, up-conversion is to modulate a baseband signal to a carrier, or to convert a signal modulated on a low-frequency carrier to a high-frequency carrier. Specifically, frequency mixing is performed on a signal whose frequency is converted and a sine signal (local oscillator) generated by a local oscillator (local oscillator, LO) to change a frequency band of the signal. An upper sideband signal after frequency mixing is obtained as up-conversion, that is, a frequency is increased; and a lower sideband signal after frequency mixing is obtained as down-conversion, that is, a frequency is decreased.

6. Monophonic signal and multi-tone signal

A monophonic signal is a sine wave of a frequency, that is, a monophonic signal has only one spectral line. A multi-tone signal is generated by superposing a plurality of independent sine signal waveforms, that is, the multi-tone signal has a plurality of spectral lines.

For ease of understanding embodiments of this application, the following points are described.

First, in this application, unless otherwise stated or there is a logic conflict, terms and/or descriptions between different embodiments are consistent and may be mutually referenced, and technical features in different embodiments may be combined into a new embodiment based on an internal logical relationship thereof.

Second, in this application, "at least one" means one or more, and "a plurality of" means two or more. "And/or" describes an association relationship between associated objects, and indicates that three relationships may exist. For example, A and/or B may indicate the following cases: A exists alone, both A and B exist, and B exists alone, where A and B may be singular or plural. In the descriptions of this application, the character "/" usually indicates an "or" relationship between the associated objects. "At least one of the following items (pieces)" or a similar expression thereof refers to any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.

Third, in this application, "first", "second", and various numbers (for example, #1 and #2) are merely used for distinguishing for ease of description and are not intended to limit the scope of embodiments of this application, for example, are used for distinguishing different messages, rather than describing a specific order or sequence. It should be understood that objects described in such a way are interchangeable in an appropriate circumstance, so that a solution other than embodiments of this application can be described.

Fourth, in this application, descriptions such as "when ...", "in a case of ...", and "if" all mean that a device performs corresponding processing in a specific objective situation, and are not intended to limit time. The descriptions do not mean that the device is required to have a determining action during implementation, and do not mean any other limitation.

Fifth, the terms "include", "contain" and any other variants thereof in this application are intended to cover non-exclusive inclusion. For example, a process, method, system, product, or device that includes a series of steps or units is not limited to those clearly listed steps or units, but may include other steps or units that are not explicitly listed or are inherent to such a process, method, system, product, or device.

Sixth, in this application, the "protocol" may mean a standard protocol in the communication field, for example, may include a 5G protocol, a Bluetooth protocol, and a related protocol applied to a future communication system. This is not limited in this application.

Seventh, in this application, a frequency is a specific absolute frequency value, and is generally a center frequency of a modulated signal. It should be understood that the frequency is a number of a fixed frequency. A frequency band refers to a range from one frequency to another frequency.

The technical solutions provided in this application are described in detail below with reference to the accompanying drawings. A Bluetooth AoA is used as an example to specifically describe how to perform angle measurement quickly and accurately.

FIG. 4 is a schematic flowchart of a first angle determining method according to an embodiment of this application. As shown in FIG. 4, the method includes the following plurality of steps.

S410: A sending device generates a first multi-tone signal.

It should be understood that the first multi-tone signal includes N1 frequencies, where N1 is an integer greater than or equal to 2.

For example, N1=4, to be specific, the first multi-tone signal includes a first frequency, a second frequency, a third frequency, and a fourth frequency. For example, the first frequency is -1.5 MHz, the second frequency is -0.5 MHz, the third frequency is 0.5 MHz, and the fourth frequency is 1.5 MHz. The four frequencies are different from each other.

In a possible implementation, the sending device includes N1 digital local oscillators LOs and a radio frequency RF LO, and the N1 digital LOs are in a one-to-one correspondence with the N1 frequencies. The sending device adds signals of the N1 digital LOs to obtain a first baseband multi-tone signal. Frequency mixing is performed on the first baseband multi-tone signal and a signal of the RF LO, that is, the sending device performs up-conversion processing on the first baseband multi-tone signal to obtain a first radio frequency multi-tone signal.

In a possible implementation, any two adjacent frequencies in the N1 frequencies have a same frequency separation.

For example, the frequency separation between any two adjacent frequencies is 1 MHz, 2 MHz, or the like. For example, the first multi-tone signal includes a first frequency, a second frequency, and a third frequency, the first frequency is 0 MHz, the second frequency is 1 MHz, and the third frequency is 2 MHz. In this case, a frequency separation between the first frequency and the second frequency is the same as a frequency separation between the second frequency and the third frequency, namely, 1 MHz.

Optionally, any two adjacent frequencies in the N1 frequencies of the first multi-tone signal may alternatively have different frequency separations. This is not specifically limited thereto.

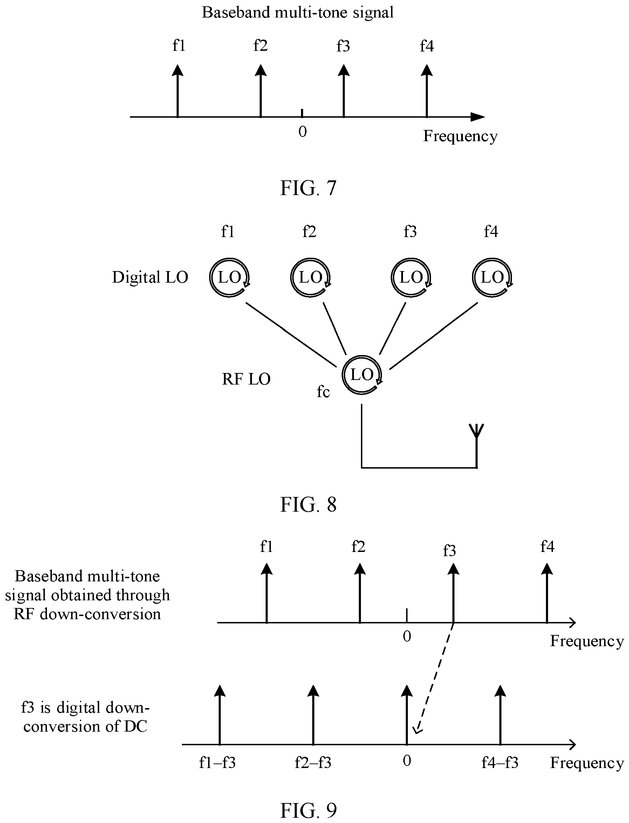

With reference to FIG. 7, S420: The sending device sends the first multi-tone signal.

Correspondingly, a receiving device receives the first multi-tone signal.

For example, the sending device is an AoA/AoD sending device, and the receiving device is an AoA/AoD receiving device.

Optionally, the sending device and the receiving device may be used in a plurality of possible application scenarios. For example, the sending device mentioned in the following embodiments may be an initiation station, and the receiving device is a response station; or the sending device is a response station, and the receiving device is an initiation station. Optionally, the sending device may alternatively be a positioning device, and the second device is a mobile tag; or the sending device is a mobile tag, and the receiving device is a positioning device.

For example, for AoA angle measurement, the sending device continuously sends the first multi-tone signal through a single antenna, and the receiving device receives the first multi-tone signal through k antennas.

For example, for AoD angle measurement, the sending device continuously sends the first multi-tone signal through k antennas, and the receiving device receives the first multi-tone signal through a single antenna.

In a possible implementation, the receiving device receives the first radio frequency multi-tone signal through an antenna. The first radio frequency multi-tone signal is obtained through up-conversion processing based on the first baseband multi-tone signal. The receiving device performs down-conversion processing on the first radio frequency multi-tone signal, and obtains the first baseband multi-tone signal. For example, the N1 frequencies of the first radio frequency multi-tone signal are obtained by adding an fc frequency based on the N1 frequencies of the first baseband multi-tone signal, where fc is a frequency of the RF LO, so that a frequency band of the first baseband multi-tone signal obtained through up-conversion, namely, the first radio frequency multi-tone signal covers an entire frequency band of the BLE AoA, for example, 2.404 GHz to 2.478 GHz.

It should be noted that, in this implementation, the first radio frequency multi-tone signal is the first multi-tone signal. For example, when an angle of arrival of the signal is determined, a phase difference between radio frequency signals of two antennas needs to be measured. Considering that a frequency of the radio frequency signal changes excessively fast, it is difficult to directly measure a phase of the radio frequency signal. Therefore, in an engineering implementation, the radio frequency signal is down-converted to a baseband signal with a low frequency, and then the phase of the radio frequency signal is indirectly obtained by performing phase measurement on the baseband signal. A phase of the RF LO affects a phase value of the baseband signal during down-conversion processing. However, because the RF LO has same impact on phases of the k antennas, when a phase difference between the k antennas is calculated, the impact of the RF LO on the phase may be canceled.

In a possible implementation, initial phases of the N1 digital LOs are the same when the N1 digital LOs are started, and initial phases of an $i^{th}$ digital LO at a first moment and a second moment are the same. The first moment is a sending moment of the first multi-tone signal, and the second moment is a sending moment of a second multi-tone signal; or the first moment is a receiving moment of the first multi-tone signal, and the second moment is a receiving moment of a second multi-tone signal.

Based on this implementation, it is ensured that the initial phases of the plurality of digital LOs of the sending device are the same when the plurality of digital LOs are started, and initial phase values of a same digital LO need to be the same in angle measurement processes. Similarly, initial phases of a plurality of digital LOs of the receiving device are the same when the plurality of digital LOs are started, and initial phase values of a same digital LO need to be the same in angle measurement processes. This avoids introducing an additional phase error, and can improve angle measurement precision.

It should be noted that the plurality of RF LOs and the digital LOs of the receiving device are not out of lock.

In other words, in this implementation, phase values corresponding to different frequencies of antennas need to be obtained by switching the antennas. To avoid an extra phase introduced by the LO (including the RF LO and the digital LO), in an antenna switching process, for example, when the angle of arrival of the signal is measured, the RF LO and the plurality of digital LOs of the receiving device keep rotating, and the plurality of digital LOs and the RF LO of the sending device also need to keep rotating, that is, send a multi-tone signal continuously.

In a possible implementation, the sending device sends a second signal. Correspondingly, the receiving device receives the second multi-tone signal. The second multi-tone signal includes N2 frequencies, there are M common frequencies between the N2 frequencies and N1 frequencies, N2 is an integer greater than or equal to 2, and M is an integer greater than or equal to 1 and less than a minimum value of N1 and N2.

For example, N2=3, to be specific, the second multi-tone signal includes a first frequency, a second frequency, and a third frequency. For example, the first frequency is 1.5 MHz, the second frequency is 2.5 MHz, the third frequency is 3.5 MHz, and the three frequencies are different from each other. The fourth frequency of the first multi-tone signal is 1.5 MHz, that is, the first multi-tone signal and the second multi-tone signal have a common frequency, that is, 1.5 MHz.

S430: The receiving device performs phase measurement on the first multi-tone signal.

S440: The receiving device obtains first phase values that correspond to k antennas of a first device and that are at the N1 frequencies, where

k is an integer greater than or equal to 2.

It should be understood that the first phase values may be considered as a phase matrix with k columns and N1 rows, and a quantity of phase values in the phase matrix may be greater than or equal to 2 and less than or equal to k multiplied by N1. For example, N1 is equal to 4, and k is equal to 2. In this case, the first phase value represents a phase matrix with two columns and four rows, including phase values that respectively correspond to four frequencies of the two antennas, that is, eight phase values. Certainly, there may be a case in which no phase value is collected by an antenna at a frequency or a phase value error is large in an angle measurement process of the first multi-tone signal due to interference of another signal. This is not specifically limited in this application.

In a possible implementation, the receiving device includes N1 digital LOs, and the N1 digital LOs are in a one-to-one correspondence with the N1 frequencies. That the receiving device performs phase measurement on the first multi-tone signal, and obtains first phase values that correspond to k antennas of a first device and that are at the N1 frequencies includes: An $i^{th}$ digital LO of the receiving device performs digital down-conversion processing on the first multi-tone signal, performs IQ averaging processing on the first multi-tone signal obtained through digital down-conversion, and obtains first phase values that correspond to the k antennas of the first device and that are at an $i^{th}$ frequency, where i is an integer greater than or equal to 1 and less than or equal to N1.

In this implementation, the receiving device obtains an average IQ of a frequency signal at an antenna by using an IQ averaging method (IQs of other frequencies are canceled), and may calculate a phase value of the frequency signal at the antenna based on the average IQ. Similarly, a phase value of the frequency signal at another antenna can be obtained, and then a phase difference of the frequency signal between the two antennas can be obtained for calculating an angle of arrival. It should be understood that the foregoing process is applicable to processing of all other frequency signals.

In a possible implementation, when the first device is the receiving device, the angle of the signal of the first device is an angle of arrival of the receiving device.

For example, the first device is the receiving device, the sending device sends the first multi-tone signal through the single antenna, and the receiving device receives the first multi-tone signal through the k antennas, and obtains, in an antenna switching process, phase values corresponding to each antenna at the N1 frequencies, and determines the angle of arrival, that is, $\theta$, by comparing a difference between phase values corresponding to two antennas on a same frequency and according to a formula $\varphi = 2\pi \cdot d \cdot \sin\theta$ of a phase difference and an angle of incidence of the signal.

In another possible implementation, when the first device is the sending device, the angle of the signal of the first device is an angle of departure of the sending device.

For example, the first device is the sending device. The sending device sends the first multi-tone signal through a plurality of antennas, and the receiving device receives the first multi-tone signal through a single antenna. In a process in which the sending device switches an antenna to continuously send the first multi-tone signal, obtains phase values corresponding to N1 frequencies of each antenna, and determines an angle of departure by comparing phase values corresponding to a same frequency of two antennas of the sending device.

In a possible implementation, the receiving device performs phase measurement on the second multi-tone signal, and obtains second phase values that correspond to the k antennas of the first device and that are at the N2 frequencies. The receiving device determines the angle of the signal of the first device based on the obtained second phase values; or the receiving device determines the angle of the signal of the first device based on the obtained first phase values and the obtained second phase values.

In other words, the angle of the signal of the first device may be determined by measuring the phase corresponding to the second multi-tone signal; or the angle of the signal of the first device may be determined by combining a phase value of the first multi-tone signal and a phase value of the second multi-tone signal.

It should be understood that the second phase values may be considered as a phase matrix with k columns and N2 rows, and a quantity of phase values in the phase matrix may be greater than or equal to 2 and less than or equal to k multiplied by N2. For example, N2 is equal to 3, and k is equal to 2. In this case, the second phase values represent a phase matrix with two columns and three rows, including phase values that respectively correspond to the two antennas and that are at three frequencies, that is, six phase values. Certainly, there may be a case in which no phase value is collected by an antenna at a frequency or a phase value error is large in an angle measurement process of the second multi-tone signal due to interference of another signal. This is not specifically limited in this application.

In a possible implementation, that the receiving device determines the angle of the signal of the first device based on the obtained first phase values and the obtained second phase values includes: The receiving device determines a phase compensation value based on the obtained first phase values and the obtained second phase values; the receiving device compensates the first phase values based on the phase compensation value; and the receiving device determines the angle of the signal of the first device based on the first phase values obtained through compensation and the second phase values.

Optionally, that the receiving device determines the angle of the signal of the first device based on the obtained first phase values and the obtained second phase values includes: The receiving device determines a phase compensation value based on the obtained first phase values and the obtained second phase values; the receiving device compensates the second phase value based on the phase compensation value; and the receiving device determines the angle of the signal of the first device based on the second phase values obtained through compensation and the first phase values.

For example, N1=4, and four frequencies of the first multi-tone signal are respectively -1.5 MHz, -0.5 MHz, 0.5 MHz, and 1.5 MHz; and N2=3, and three frequencies of the second multi-tone signal are 1.5 MHz, 2.5 MHz, and 3.5 MHz. That is, M=1, and a common frequency is 1.5 MHz. For example, when an antenna is switched to, a phase value obtained by the first multi-tone signal through measurement at -1.5 MHz is $\varphi_1$, and a phase value obtained by the second multi-tone signal through measurement at -1.5 MHz is $\varphi_2$. Therefore, compensation may be performed on $\varphi_1$ based on a difference $\Delta\varphi=\varphi_1-\varphi_2$ between the phase values, so that the phase value obtained by the first multi-tone signal through measurement at -1.5 MHz is the same as the phase value obtained by the second multi-tone signal through measurement at -1.5 MHz, so that the phase values can be combined to obtain a phase value corresponding to a larger frequency band range. For example, a target phase matrix obtained through combination includes phase values corresponding to the k antennas at 6 (N1+N2-M) frequencies.

It should be noted that, when the phase values corresponding to the first multi-tone signal and the second multi-tone signal are combined, initial phases of the RF LO in the two measurement processes may be any values, and a difference between the initial phases of the RF LO in the two times of angle measurement is calculated by using a method of sharing a frequency (or channel), so that the initial phase value of the RF LO can be compensated. Therefore, impact on an angle measurement result of a signal, such as an error, can be avoided or reduced. In this implementation, angle measurement precision can be improved.

In a possible implementation, a time interval between the sending moment of the first multi-tone signal and the sending moment of the second multi-tone signal is the same as a time interval between the receiving moment of the first multi-tone signal and the receiving moment of the second multi-tone signal.

Based on this implementation, time of flight of a signal can remain unchanged in an entire measurement process, to avoid introducing an unnecessary error.

S450: The receiving device determines the angle of the signal of the first device based on the obtained first phase values.

In a possible implementation, that the receiving device determines the angle of the signal of the first device based on the obtained first phase values includes: The receiving device determines the angle of the signal of the first device based on a difference between a phase value that corresponds to a first antenna and that is at the $i^{th}$ frequency and a phase value that corresponds to a second antenna and that is at the $i^{th}$ frequency. The first antenna and the second antenna are any two different antennas in the k antennas, and i is an integer greater than or equal to 1 and less than or equal to N1.

For example, when the angle of arrival AoA is measured, the receiving device separately obtains, by switching antennas, phase values that correspond to the k antennas and that are at the N1 frequencies, and determines the angle of arrival by comparing a difference between phase values that correspond to two antennas and that are at a same frequency. For example, if a phase value corresponding to the first antenna at a frequency f1 is $\varphi_1$, and a phase value corresponding to the second antenna at the frequency f1 is $\varphi_2$, a difference between the phase values corresponding to the two antennas at the same frequency f1 is $\Delta\varphi = \varphi_1 - \varphi_2$, and the AoA angle of the signal of the receiving device is $\theta = \arcsin(\Delta\varphi / 2\pi \cdot d)$. A distance between the two antennas is $d \cdot \lambda$, where $\lambda$ is a wavelength of a signal.

It should be understood that the angle of arrival or the angle of departure of the signal may be determined based on a difference between phase values that correspond to a same frequency and that are of any two of the k antennas. Differences of a plurality of groups of phase values may be further obtained through angle measurement performed by switching the k antennas. For example, accurate measurement of the angle of the signal may be implemented through averaging processing.

According to the solution provided in this application, the multi-tone signal is received, phase measurement is performed on the multi-tone signal, and the angle of the signal of the first device is determined based on the obtained measurement values. In comparison with conventional phase measurement based on a monophonic signal, in phase measurement in which a multi-tone signal is used to determine the angle, phase values can be quickly obtained, measurement efficiency can be improved, and fast angle measurement can be implemented.

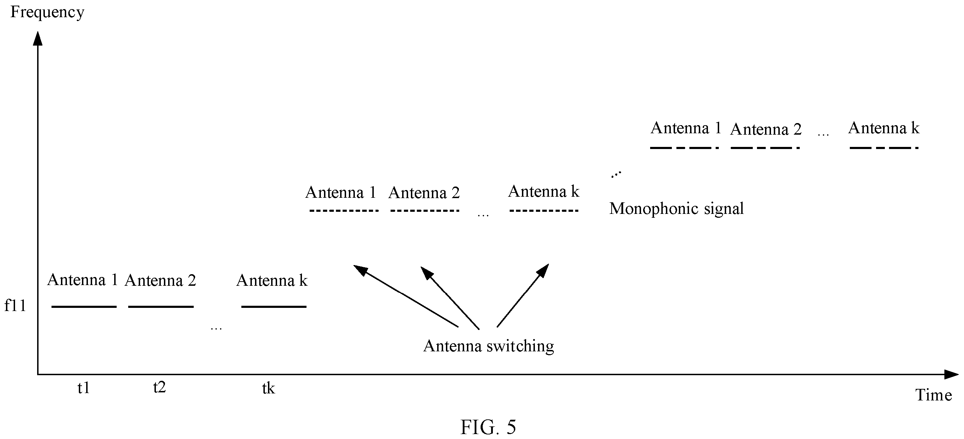

It should be understood that, although a bandwidth of a narrowband wireless device is narrower than that of another wireless device, the narrowband wireless device generally has a bandwidth of several MHz. In the technical solutions of this application, AoA/AoD angle measurement is performed based on the multi-tone signal by using the bandwidth of the several MHz, so that AoA/AoD angle measurement of a plurality of frequencies can be completed more quickly. The following uses AoA angle measurement as an example, and specifically describes, with reference to FIG. 5 to FIG. 12, that a phase value is measured by receiving and sending a multi-tone signal, to determine an angle of arrival; and that an angle of arrival corresponding to a LOS signal is quickly and accurately identified and determined based on combination of phase values of the multi-tone signal. It should be noted that, the technical solution of the application is also applicable to determining of an angle of departure. A specific implementation is similar to a manner of determining an angle of arrival. For brevity, details are not described in this application.

FIG. 5 is a diagram of AoA angle measurement based on a conventional monophonic signal according to an embodiment of this application. As shown in FIG. 5, a horizontal coordinate is time, and a vertical coordinate is frequency. k antennas are used as an example. In AoA angle measurement based on a monophonic signal, only a phase of an antenna at one frequency can be measured at one moment. For example, at a moment t1, a receiving device may obtain, through measurement, a phase $\varphi_1$ corresponding to an antenna 1 at a frequency f11; and then switch to an antenna 2 for AoA angle measurement. At a moment t2, the receiving device may obtain, through measurement, a phase $\varphi_2$ corresponding to the antenna 2 at the frequency f11. The rest may be deduced by analogy. The receiving device switches to an antenna k for measurement. At a moment tk, the receiving device may obtain, through measurement, a phase $\varphi_k$ corresponding to the antenna k at the frequency f11. In other words, in the AoA angle measurement process, after k-1 times of antenna switching, the receiving device may obtain all phases of the k antennas at the same frequency f11, that is, a phase array whose size is k.

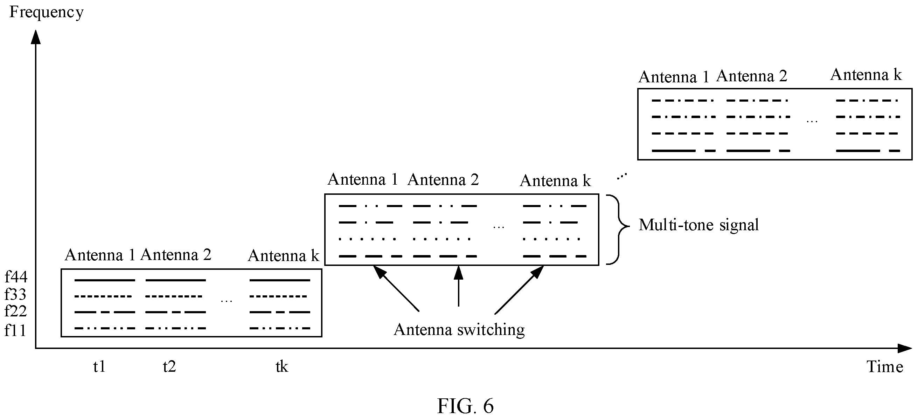

FIG. 6 is a diagram of AoA angle measurement based on a multi-tone signal according to an embodiment of this application. As shown in FIG. 6, a horizontal coordinate is time, and a vertical coordinate is frequency. k antennas and N=4 tones are as an example. In the AoA angle measurement based on the multi-tone signal, phases of an antenna at a plurality of frequencies may be measured at one moment. For example, at a moment t1, a receiving device may simultaneously obtain, through measurement, phases $\varphi_1$ to $\varphi_4$ corresponding to an antenna 1 at frequencies f11 to f44, and then switch to an antenna 2 to perform AoA angle measurement. At a moment t2, the receiving device may simultaneously obtain, through measurement, phases $\varphi_5$ to $\varphi_8$ corresponding to the antenna 2 at the frequencies f11 to f44. The rest may be deduced by analogy. The receiving device switches to an antenna k to perform AoA angle measurement. At a moment tk, the receiving device may simultaneously obtain, through measurement, phases $\varphi_{4k-3}$ to $\varphi_{4k}$ corresponding to the antenna k at the frequencies f11 to f44. In other words, in the AoA angle measurement process, after k-1 times of antenna switching, the receiving device may obtain phases of k antennas at a plurality of frequencies (for example, f11 to f44), that is, a 4 x k phase matrix.

It should be understood that the frequency f11 shown in FIG. 5 is a frequency of a radio frequency signal, that is, a frequency of a radio frequency signal obtained after up-conversion processing is performed on a frequency f1 of a baseband signal, for example, 2.450 GHz. Similarly, the frequencies f11 to f44 shown in FIG. 6 are also frequencies of radio frequency signals, that is, frequencies of radio frequency signals obtained after up-conversion processing is performed on frequencies f1 to f4 of the baseband signal, for example, 2.450 GHz to 2.480 GHz.

It should be noted that the f11 shown in FIG. 5 and the f11 to f44 shown in FIG. 6 are merely examples for ease of understanding of the solution. A quantity of frequencies and specific values of the frequencies are not specifically limited in this application.

Based on the AoA angle measurement methods shown in FIG. 5 and FIG. 6, for N adjacent frequencies, if the conventional AoA method is used, AoA angle measurement needs to be performed for N times to implement full coverage. If the multi-tone AoA method (N tones are set) is used, only one time of AoA angle measurement needs to be performed to implement full coverage. That is, the multi-tone AoA method can be used to reduce time for measuring a monophonic AoA angle to one Nth, for example, for the four tones shown in FIG. 6, may reduce overall time for measuring a monophonic AoA angle shown in FIG. 5 to 25%.

It should be noted that the quantity of the multi-tone signals N=4 shown in FIG. 6 is merely an example for ease of understanding of the technical solution. The quantity N of tones in the multi-tone signal and a frequency separation between the tones are not specifically limited in this application. Optionally, to perform AoA angle measurement on an entire frequency band evenly, in this embodiment of this application, an example in which a same frequency separation is used between tones may be used for description. For example, frequency separations between f1 to f4 are the same.

The following describes specific implementations of receiving and sending a multi-tone signal and phase measurement by using FIG. 7 to FIG. 9.

FIG. 7 is a diagram of a baseband multi-tone signal according to an embodiment of this application. As shown in FIG. 7, it is assumed that N=4 tones, and frequencies of the tones correspond to f1, f2, f3, and f4. For example, f1 is -1.5 MHz, f2 is -0.5 MHz, f3 is +0.5 MHz, and f4 is +1.5 MHz. The spacings between the frequencies f1 to f4 may be the same, or may be different. This is not specifically limited in this application. Optionally, to implement even AoA measurement on the entire frequency band, the frequency separations between f1 to f4 in this embodiment of this application may be set to be the same. It should be noted that a frequency band from f1 to f4 should not exceed a bandwidth supported by the device.

FIG. 8 is a diagram of performing up-conversion processing on a multi-tone signal according to an embodiment of this application. As shown in FIG. 8, one radio frequency local oscillator (radio frequency LO, RF LO) and a plurality of digital LOs (four digital LOs shown in the figure) are included. The digital LO may be implemented by using a lookup table that stores a cosine waveform, and four digital LOs correspond to N=4 tones. For example, frequencies of the four tones corresponding to the four digital LOs are f1, f2, f3, and f4 successively. In other words, a frequency of the digital LO is in a one-to-one correspondence with a frequency of a baseband multi-tone signal. Values of f1, f2, f3, and f4 are not specifically limited in this application. For example, f1 is -1.5 MHz, f2 is -0.5 MHz, f3 is +0.5 MHz, and f4 is +1.5 MHz. A frequency of the RF LO is fc. BLE AoA angle measurement is used as an example, and fc may be a frequency band of 2.404 GHz to 2.478 GHz.

When sending the multi-tone signal, the sending device first adds signals of the plurality of digital LOs as a baseband multi-tone signal (as shown in FIG. 8), and then sends the baseband multi-tone signal to the RF LO via a digital-to-analog converter (digital-to-analog converter, DAC), or performs up-conversion processing through an all-digital phase-locked loop (all-digital phase-locked loop, ADPLL), and finally transmits the multi-tone signal through an antenna. For example, in an up-conversion processing process, the frequencies f1 to f4 of the four tones in the baseband multi-tone signal may be uniformly increased by 2.402 GHz, to correspond to a frequency band 2.404 GHz to 2.478 GHz of a Bluetooth channel. In other words, based on this implementation, frequencies of the four tones of the baseband multi-tone signal shown in FIG. 7 are shifted rightwards by 2.402 GHZ.

When receiving a multi-tone signal, the receiving device first performs down-conversion processing on the signal through the RF LO to obtain a baseband multi-tone signal, and then sends the baseband multi-tone signal to the four digital LOs respectively for "digital down-conversion" processing, that is, converts signals corresponding to frequencies of the four digital LOs into direct current (direct current, DC) signals (which may be understood as frequency 0) respectively, and then performs phase measurement.

FIG. 9 is a diagram of phase measurement of a baseband multi-tone signal according to an embodiment of this application. As shown in FIG. 9, a multi-tone signal includes four frequencies (for example, f1 to f4), where f1 to f4 are frequencies of tones corresponding to four digital LOs respectively. For example, phase measurement of a third signal f3 is used as an example for specific description. After the "digital down-conversion processing", frequencies of the four signals are $f_1 - f_3$, $f_2 - f_3$, 0, and $f_4 - f_3$, and are mixed together. To obtain a phase of the third signal f3, in-phase/quadrature (In-phase/Quadrature, IQ) averaging may be performed on the signals obtained through "digital down-conversion", and used IQ accumulation periods are:

common multiples of $\dfrac{1}{|f_1 - f_3|}$, $\dfrac{1}{|f_2 - f_3|}$ and $\dfrac{1}{|f_4 - f_3|}$.

In this way, the impact of the other three signals on the third signal f3 may be canceled, so that a phase included in a final average IQ is a phase of the third signal f3. Similarly, phases of the other three signals may be obtained.

It should be noted that, in multi-tone AoA angle measurement, a receiving device needs to switch antennas, and measures a phase value corresponding to each antenna by angle. When switching to an antenna, the receiving device may measure a phase of each tone by using the foregoing method. To avoid an extra phase introduced by the LO (including the RF LO and the digital LO), the RF LO and the digital LO of the receiving device need to keep rotating in an antenna switching process. Similarly, the RF LO and the digital LO of a sending device also need to keep rotating, that is, send a multi-tone signal continuously.

According to the technical solutions of this application, a multi-tone signal is used as a reference signal for performing AoA/AoD angle measurement, so that AoA/AoD angle measurement of all frequencies can be completed more quickly. This means that AoA/AoD requires lower power consumption, and for a battery-powered device, standby time of the device can be increased. AoA/AoD angle measurement of more devices can be performed with a higher system capacity. A faster angle refresh rate can be used to locate a faster device.

According to the foregoing method 400, it can be learned that an N x k phase matrix may be obtained by performing one time of angle measurement on the multi-tone signal AoA/AoD. In other words, information of two dimensions may be obtained by measuring an AoA/AoD angle of a multi-tone signal: information of an antenna (or space) dimension (that is, k antennas) and information of a frequency dimension (that is, N frequency s). The information of the frequency dimension may be used to assist in identifying a line-of-sight LOS signal in a multipath reflection environment. In the multipath reflection environment, each path obtained through angle measurement has a corresponding AoA/AoD. However, only an AoA/AoD corresponding to the line-of-sight LOS is a target angle of arrival, and may be used as a final AoA/AoD estimation value, thereby improving angle precision. Therefore, in this application, a manner of combining phase values of a plurality of angles of arrival or angles of departure is used to obtain a phase value matrix with more frequencies, and the phase value matrix is used to parse time of flight of a multipath signal, to obtain an AoA/AoD estimation value, thereby improving angle precision.

The following provides a specific analysis principle for determining the LOS and the AoA corresponding to the LOS.

Specifically, a signal transmitted by the sending device is $2\pi(f_c + f_i)t + \varphi_{TX-RF} + \varphi_{TX-i}$.

$f_c$ is a carrier frequency, in other words, a frequency of the RF LO, $f_i$ is a frequency of an $i^{th}$ tone in the baseband multi-tone signal, for example, f1, f2, f3, and f4 shown in FIG. 7, t is time, $\varphi_{TX-RF}$ is an initial phase of the RF LO of the sending device, and $\varphi_{TX-i}$ is an initial phase of a digital LO corresponding to the $i^{th}$ tone in the sending device.

A signal of the RF LO of the receiving device is $2\pi f_c t + \varphi_{RX-RF}$, and a signal of the digital LO signal corresponding to the $i^{th}$ tone of the receiving device is $2\pi f_i t + \varphi_{RX-i}$.

The signal $2\pi f_c t + \varphi_{RX-RF}$ of the RF LO may be used by a frequency mixer in an RF circuit to perform RF down-conversion processing on a received signal. The signal $2\pi f_i t + \varphi_{RX-i}$ of the digital LO may be used to perform digital down-conversion processing on the baseband multi-tone signal, to obtain a DC signal for phase measurement.

It is assumed that T is time of flight (time-of-flight, ToF) of a multi-tone signal from a sending device to a receiving device. Because clocks of the sending device and the receiving device are not synchronized, a fixed time deviation $\tau_{offset}$ exists between time axes of the two devices. Therefore, for the RF LO signal and the digital LO signal of the receiving device, it is assumed that a scenario in which only an antenna of the receiving device is considered, and a signal correspondingly received by the receiving device is:

$$2\pi\left(f_c + f_i\right)\cdot\left(t - \tau - \tau_{offset}\right) + \varphi_{TX-RF} + \varphi_{TX-i}.$$

Therefore, after RF and digital down-conversion, a phase obtained by the receiving device by performing angle measurement is:

$$-2\pi\left(f_c + f_i\right)\cdot\left(\tau + \tau_{offset}\right) + \varphi_{TX-RF} + \varphi_{TX-i} - \varphi_{RX-RF} - \varphi_{RX-i}.$$

If initial phases of the digital LOs of the sending device are the same (that is, $\varphi_{TX-i}$ is the same for different values of $i$), and initial phases of the digital LOs of the receiving device are the same (that is, $\varphi_{RX-i}$ is the same for different values of $i$), it can be learned from a phase formula $-2\pi(f_c + f_i)\cdot(\tau + \tau_{offset}) + \varphi_{TX-RF} + \varphi_{TX-i} - \varphi_{RX-RF} - \varphi_{RX-i}$ that a phase difference between the tones may be used to calculate time ($\tau + \tau_{offset}$). For example, a relationship between $\tau$ and a phase difference between $f_i$ and $f_j$ obtained through angle measurement satisfies: $\Delta\varphi_{ij} = -2\pi(f_i - f_j)\cdot(\tau + \tau_{offset})$. It should be noted that, because the fixed time deviation $\tau_{offset}$ is unknown, an absolute value of $\tau$ cannot be obtained.

Optionally, if the initial phases of the digital LOs of the sending device and the receiving device are random, to make configuration of the digital LOs more flexible, the sending device and the receiving device may separately send respective digital LO initial phases to a device that runs an angle algorithm, to compensate for a phase measurement value, so that when a phase difference between two frequencies fi and fj is calculated, impact of the digital LO initial phase can be canceled, that is, the formula $\Delta\varphi_{ij} = -2\pi(f_i - f_j)\cdot(\tau + \tau_{offset})$ can be satisfied. It should be noted that a specific sending manner in which the sending device and the receiving device separately send respective digital LO initial phases to the device that runs the angle algorithm is not limited in this application.

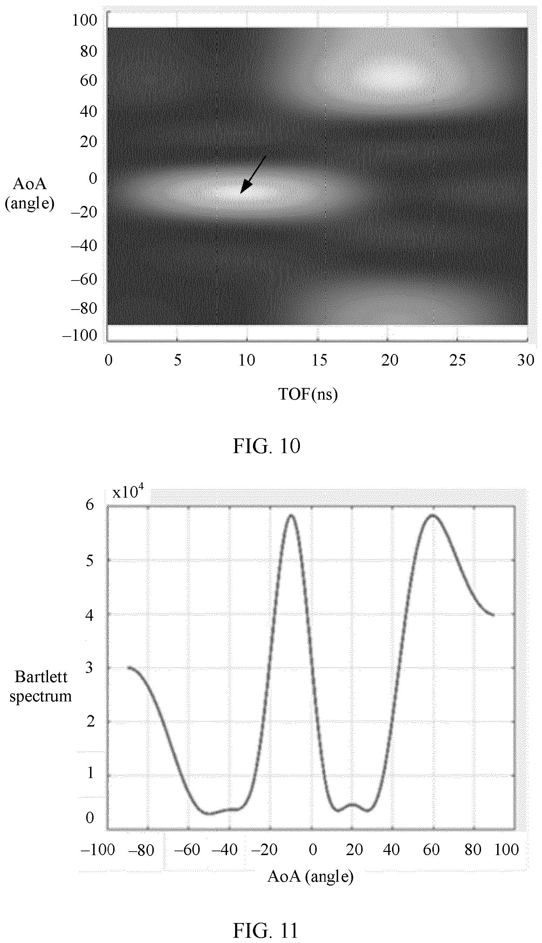

It is assumed that the multi-tone signal has one time of multipath reflection in a transmission process, and time of flight of the signal in the reflection path is $\tau'$, and $\tau < \tau'$. Based on the phase difference between the foregoing tones, relative values of $\tau$ and $\tau'$ may be obtained through parsing by using an existing algorithm. For brevity, a specific algorithm and a parsing manner are not described again. It should be understood that, although the relative values of $\tau$ and $\tau'$ obtained through parsing are not absolute values, which is a line of sight may be determined based on a relative relationship between the relative values. Then, a two-dimensional energy diagram shown in FIG. 10 may be obtained by using the existing algorithm based on the information of the frequency dimension and the information of the antenna dimension (that is, based on the entire N x k matrix).

FIG. 10 is a diagram of two-dimensional (a frequency dimension and an antenna dimension) energy according to an embodiment of this application. As shown in FIG. 10, a horizontal coordinate is time of flight TOF (ns) of a multi-tone signal from a sending device to a receiving device, and a vertical coordinate is an AoA angle. It can be learned from a relative value of the ToF of the horizontal coordinate that a TOF of a peak (peak) on the right is about 20 ns, and a corresponding AoA angle is about 60°. A TOF of a peak on the left is about 10 ns, and a corresponding AoA angle is about -10°. Obviously, the TOF on the left is smaller than the TOF on the right. Therefore, the peak on the left is a line of sight.

If the information of the frequency dimension is not considered and only the information of the antenna dimension is considered, that is, in a monophonic AoA scenario, a one-dimensional energy diagram shown in FIG. 11 may be obtained.

FIG. 11 is a diagram of one-dimensional (an antenna dimension) energy according to an embodiment of this application. As shown in FIG. 11, a horizontal coordinate is an AoA angle, and a vertical coordinate is a corresponding Bartlett spectrum. It can be learned that energy of a left peak and energy of a right peak are equal, and are approximately $5.8 \times 10^4$. This implementation cannot be used to determine which peak is a line of sight, and therefore cannot determine which (-10° and 60°) can be used as a final AoA estimation value.

In conclusion, time of flight TOF is analyzed based on the information of the frequency dimension, to further assist in parsing the line of sight. A parsing capability of this manner depends on a size of the frequency dimension. It should be understood that a wider frequency band indicates a stronger TOF parsing capability, that is, two signals whose TOFs are closer to each other are parsed out.

For a low-power narrowband wireless technology, because a bandwidth is only several MHz, this application proposes that a plurality of multi-tone AoA angle measurement values are combined, to increase a width of a frequency band, that is, an N value in an N x k matrix is increased, so as to improve a TOF parsing capability of a multipath signal. It should be understood that a phase difference between two frequencies fi and fj obtained through combination still meets the foregoing formula $\Delta\varphi_{ij} = -2\pi(f_i - f_j) \cdot (\tau + \tau_{offset})$, and may be used for parsing TOF of the multipath signal.

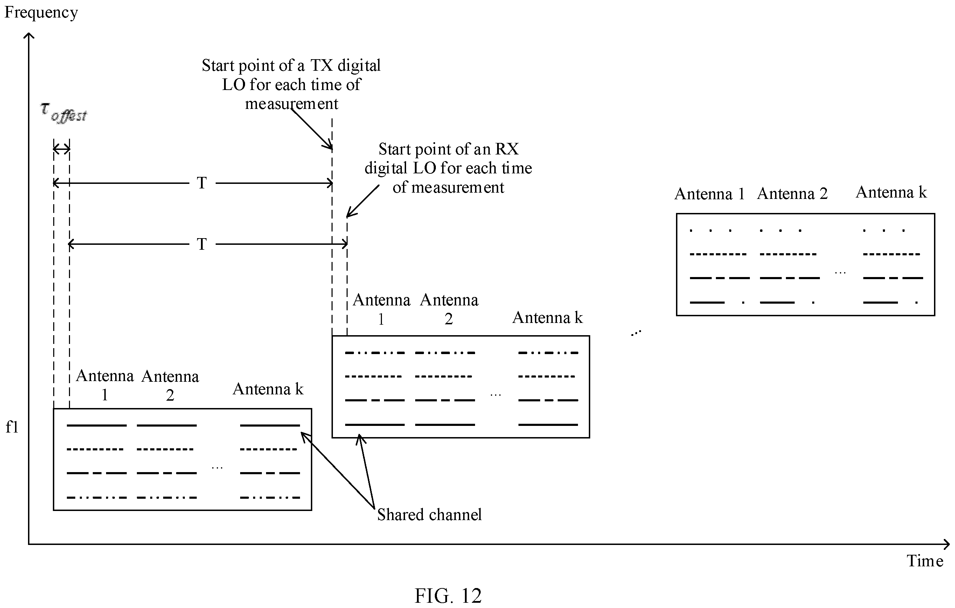

FIG. 12 is a diagram of combining AoA angle measurement values based on a multi-tone signal according to an embodiment of this application. As shown in FIG. 12, a horizontal coordinate is time, and a vertical coordinate is frequency.

To keep $\tau_{offset}$ unchanged in an entire angle measurement process, $\tau_{offset}$ is a fixed time deviation between digital LO start points in each time of AoA angle measurement between the sending device and the receiving device. A time interval between start moments of digital LOs in two adjacent times of AoA angle measurement of the sending device is T, and a time interval between start moments of the digital LOs in the two adjacent times of AoA angle measurement of the receiving device is T, that is, the two time intervals need to be the same.

In addition, when the sending device starts the digital LOs, initial phases of the digital LOs of the sending device are the same (that is, $\varphi_{TX-i}$ is the same for different values of $i$), and a same initial phase value (namely, phase value used when the digital LO is started) is used for each time of AoA angle measurement. Similarly, when the receiving device starts the digital LO, initial phases of the digital LOs of the receiving device are the same (that is, $\varphi_{RX-i}$ is the same for different values of $i$), and a same initial phase value (namely, phase value used when the digital LO is started) is used for each time of AoA angle measurement.

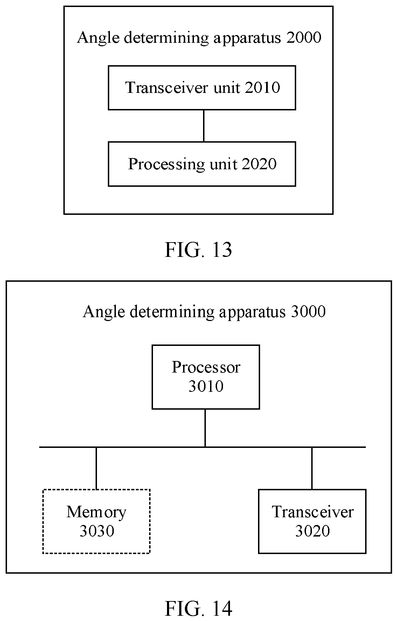

It should be noted that when each time of new AoA angle measurement is started, a phase-locked loop (phase-locked loop, PLL) of an RF circuit is re-locked. This causes an initial phase (for example, $\varphi_{TX-RF}$ and $\varphi_{RX-RF}$) of the RF LO to be an unknown random value. Therefore, to implement better combination of phase values, in this application, it needs to be ensured that there is one or more shared frequencies in any two adjacent times of AoA angle measurement. For example, in first and second times of AoA angle measurement shown in FIG. 13, there is a shared frequency f1 (or a shared channel).

Phase measurement values (that is, a difference $\varphi_{TX-RF} - \varphi_{RX-RF}$ between the two phase measurement values) of a same frequency in two times of AoA angle measurement are compared, to obtain an initial phase of the RF LO of the sending device and impact of the initial phase of the RF LO of the receiving device on the phase measurement value. Then, a group of AoA angle measurement values are compensated by using the phase difference, so that the two AoA angle measurement values can be combined to form a larger phase matrix. For example, if a quantity of common frequencies in two adjacent times of AoA angle measurement is M (M < N), a phase matrix obtained through combination is (2N - M) x k. In this implementation, phase values measured at a plurality of times of AoA angle measurement may be combined, to obtain a phase matrix with a larger vertical axis.

For example, as shown in FIG. 12, N=4. In two adjacent times of AoA angle measurement of a common frequency f1 (that is, M=1), correspondingly obtained phase measurement values are respectively φ' and φ". A difference between φ' and φ" is used to compensate for one group of AoA angle measurement values, and normalization processing is performed, so that phase values are combined at the common frequency f1. In this case, a phase matrix including 7 x k phase values may be obtained by performing two times of AoA angle measurement.

According to the technical solutions of this application, two adjacent times of AoA/AoD angle measurement are performed in a frequency sharing manner, to implement combination of phase values of the two times of angle measurement. A phase value matrix with more frequencies can be obtained, so as to obtain a better multipath signal parsing capability and improve angle estimation precision.

The foregoing describes in detail embodiments of the angle determining method side in this application with reference to FIG. 1 to FIG. 12. The following describes in detail embodiments of the apparatus side in this application with reference to FIG. 13 and FIG. 14. It should be understood that descriptions of the apparatus embodiments correspond to the descriptions of the method embodiments, and therefore for a part that is not described in detail, refer to the foregoing method embodiments.

FIG. 13 is a block diagram of an angle determining apparatus according to an embodiment of this application. As shown in FIG. 13, an apparatus 2000 may include a transceiver unit 2010 and a processing unit 2020. The transceiver unit 2010 may communicate with an outside, and the processing unit 2020 is configured to process data. The transceiver unit 1210 may also be referred to as a communication interface or a transceiver unit.

In a possible design, the apparatus 2000 may implement steps or procedures performed by a sending device in the foregoing method embodiments. The processing unit 2020 is configured to perform an operation related to processing of the sending device in the foregoing method embodiments. The transceiver unit 2010 is configured to perform an operation related to sending and receiving of the sending device in the foregoing method embodiments.

In another possible design, the apparatus 2000 may implement steps or procedures performed by a receiving device in the foregoing method embodiments. The transceiver unit 2010 is configured to perform an operation related to sending and receiving of the receiving device in the foregoing method embodiments. The processing unit 2020 is configured to perform an operation related to processing of the receiving device in the foregoing method embodiments.

It should be understood that the apparatus 2000 is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 2000 may be specifically a transmit end in the foregoing embodiments, and may be configured to perform procedures and/or steps corresponding to the transmit end in the foregoing method embodiments. Alternatively, the apparatus 2000 may be specifically a receive end in the foregoing embodiments, and may be configured to perform procedures and/or steps corresponding to the receive end in the foregoing method embodiments. To avoid repetition, details are not described herein again.

The apparatus 2000 in each of the foregoing solutions has a function of implementing corresponding steps performed by the transmit end in the foregoing method, or the apparatus 2000 in each of the foregoing solutions has a function of implementing corresponding steps performed by the receive end in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit like the processing unit may be replaced by a processor, to separately perform a sending and receiving operation and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 13 may be the receive end or the transmit end in the foregoing embodiments, or may be a chip or a chip system, for example, a system on chip (system on chip, SoC). The transceiver unit may be an input/output circuit or a communication interface. The processing unit is a processor a microprocessor or an integrated circuit integrated on the chip. This is not limited herein.

FIG. 14 shows an angle determining apparatus 3000 according to an embodiment of this application. As shown in FIG. 14, the apparatus 3000 includes a processor 3010 and a transceiver 3020. The processor 3010 and the transceiver 3020 communicate with each other through an internal connection path. The processor 3010 is configured to execute instructions, to control the transceiver 3020 to send a signal and/or receive a signal.

Optionally, the apparatus 3000 may further include a memory 3030. The memory 3030 communicates with the processor 3010 and the transceiver 3020 through an internal connection path. The memory 3030 is configured to store instructions. The processor 3010 may execute the instructions stored in the memory 3030.

In a possible implementation, the apparatus 3000 is configured to implement procedures and steps corresponding to the sending device in the foregoing method embodiments.

In another possible implementation, the apparatus 3000 is configured to implement procedures and steps corresponding to the receiving device in the foregoing method embodiments.

It should be understood that, the apparatus 3000 may be specifically the transmit end or the receive end in the foregoing embodiments, or may be a chip or a chip system. Correspondingly, the transceiver 3020 may be a transceiver circuit of the chip. This is not limited herein. Specifically, the apparatus 3000 may be configured to perform steps and/or procedures corresponding to the transmit end or the receive end in the foregoing method embodiments.

Optionally, the memory 3030 may include a read-only memory and a random access memory, and provide instructions and data to the processor. A part of the memory may further include a non-volatile random access memory. For example, the memory may further store information of a device type. The processor 3010 may be configured to execute the instructions stored in the memory. When the processor 3010 executes the instructions stored in the memory, the processor 3010 is configured to perform the steps and/or procedures corresponding to the transmit end or the receive end in the foregoing method embodiments.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the field, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor, an application-specific integrated circuit, a field programmable gate array or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the field, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code. When the computer program code is run on a computer, the computer is enabled to perform the method in the foregoing embodiments.

According to the method provided in embodiments of this application, this application further provides a computer-readable medium. The computer-readable medium stores program code, and when the program code is run on a computer, the computer is enabled to perform the method in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computing device (which may be a personal computer, a server, or a network device) to perform all or a part of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An angle determining method, comprising:

   receiving, by a receiving device, a first multi-tone signal, wherein the first multi-tone signal comprises N1 frequencies, and N1 is an integer greater than or equal to 2;
   performing, by the receiving device, phase measurement on the first multi-tone signal;
   obtaining, by the receiving device, first phase values that correspond to k antennas of a first device and that are at the N1 frequencies, wherein k is an integer greater than or equal to 2; and
   determining, by the receiving device, an angle of a signal of the first device based on the obtained first phase values.

2. The method according to claim 1, wherein

   when the first device is the receiving device, the angle of the signal of the first device is an angle of arrival of the receiving device; or
   when the first device is a sending device, the angle of the signal of the first device is an angle of departure of the sending device.

3. The method according to claim 1 or 2, wherein the receiving device comprises N1 digital local oscillators LOs, the N1 digital LOs are in a one-to-one correspondence with the N1 frequencies, and the performing, by the receiving device, phase measurement on the first multi-tone signal, and obtaining, by the receiving device, first phase values that correspond to k antennas of a first device and that are at the N1 frequencies comprises:
performing, by an $i^{th}$ digital LO of the receiving device, digital down-conversion processing on the first multi-tone signal, performing IQ averaging processing on the first multi-tone signal obtained through digital down-conversion, and obtaining first phase values that correspond to the k antennas of the first device and that are at an $i^{th}$ frequency, wherein i is an integer greater than or equal to 1 and less than or equal to N1.

4. The method according to any one of claims 1 to 3, wherein the determining, by the receiving device, an angle of a signal of the first device based on the obtained first phase values comprises:

    determining, by the receiving device, the angle of the signal of the first device based on a difference between a phase value that is of a first antenna and that corresponds to the $i^{th}$ frequency and a phase value that is of a second antenna and that corresponds to the $i^{th}$ frequency, wherein
    the first antenna and the second antenna are any two antennas in the k antennas, and i is an integer greater than or equal to 1 and less than or equal to N1.

5. The method according to any one of claims 1 to 4, wherein any two adjacent frequencies in the N1 frequencies have a same frequency separation.

6. The method according to any one of claims 1 to 5, wherein the method further comprises:
receiving, by the receiving device, a second multi-tone signal, wherein the second multi-tone signal comprises N2 frequencies, there are M common frequencies between the N2 frequencies and the N1 frequencies, N2 is an integer greater than or equal to 2, and M is an integer greater than or equal to 1 and less than a minimum value of N1 and N2.

7. The method according to claim 6, wherein the method further comprises:

    performing, by the receiving device, phase measurement on the second multi-tone signal;
    obtaining, by the receiving device, second phase values that correspond to the k antennas of the first device and that are at the N2 frequencies;
    determining, by the receiving device, the angle of the signal of the first device based on the obtained second phase values; or
    determining, by the receiving device, the angle of the signal of the first device based on the obtained first phase values and the obtained second phase values.

8. The method according to claim 7, wherein the determining, by the receiving device, the angle of the signal of the first device based on the obtained first phase values and the obtained second phase values comprises:

    determining, by the receiving device, a phase compensation value based on the obtained first phase values and the obtained second phase values;
    compensating, by the receiving device, the first phase values based on the phase compensation value; and
    determining, by the receiving device, the angle of the signal of the first device based on the first phase values obtained through compensation and the second phase values; or
    compensating, by the receiving device, the second phase values based on the phase compensation value; and
    determining, by the receiving device, the angle of the signal of the first device based on the second phase values obtained through compensation and the first phase values.

9. The method according to any one of claims 6 to 8, wherein a time interval between a sending moment of the first multi-tone signal and a sending moment of the second multi-tone signal is the same as a time interval between a receiving moment of the first multi-tone signal and a receiving moment of the second multi-tone signal.

10. The method according to any one of claims 6 to 9, wherein initial phases of the N1 digital LOs are the same when the N1 digital LOs are started, and initial phases of the $i^{th}$ digital LO at a first moment and at a second moment are the same, wherein the first moment is the sending moment of the first multi-tone signal, and the second moment is the sending moment of the second multi-tone signal; or the first moment is the receiving moment of the first multi-tone signal, and the second moment is the receiving moment of the second multi-tone signal.

11. An angle determining method, wherein the method comprises:

    generating, by a sending device, a first multi-tone signal, wherein the first multi-tone signal comprises N1 frequencies, and N1 is an integer greater than or equal to 2; and
sending, by the sending device, the first multi-tone signal, wherein the first multi-tone signal is used to determine an angle of a signal of a first device.

12. The method according to claim 11, wherein

when the first device is a receiving device, the angle of the signal of the first device is an angle of arrival of the receiving device; or
when the first device is the sending device, the angle of the signal of the first device is an angle of departure of the sending device.

13. The method according to claim 11 or 12, wherein any two adjacent frequencies in the N1 frequencies have a same frequency separation.

14. The method according to any one of claims 11 to 13, wherein the method further comprises:

generating, by the sending device, a second multi-tone signal, wherein the second multi-tone signal comprises N2 frequencies, there are M common frequencies between the N2 frequencies and the N1 frequencies, N2 is an integer greater than or equal to 2, and M is an integer greater than or equal to 1 and less than a minimum value of N1 and N2; and
sending, by the sending device, the second multi-tone signal.

15. The method according to claim 14, wherein a time interval between a sending moment of the first multi-tone signal and a sending moment of the second multi-tone signal is the same as a time interval between a receiving moment of the first multi-tone signal and a receiving moment of the second multi-tone signal.

16. The method according to claim 14 or 15, wherein the sending device comprises N1 digital local oscillators LOs, the N1 digital LOs are in a one-to-one correspondence with the N1 frequencies, initial phases of the N1 digital LOs are the same when the N1 digital LOs are started, and initial phases of an $i^{th}$ digital LO at a first moment and a second moment are the same, wherein i is an integer greater than or equal to 1 and less than or equal to N1, the first moment is the sending moment of the first multi-tone signal, and the second time is the sending moment of the second multi-tone signal; or the first moment is the receiving moment of the first multi-tone signal, and the second time is the receiving moment of the second multi-tone signal.

17. An angle determining apparatus, comprising:

a unit configured to implement the method according to any one of claims 1 to 8; or
a unit configured to implement the method according to any one of claims 9 to 16.

18. An angle determining apparatus, comprising a processor, wherein the processor is coupled to a memory, and the processor is configured to execute a computer program stored in the memory, so that the apparatus performs the method according to any one of claims 1 to 16.

19. A chip, comprising a processor, configured to invoke a computer program from a memory and run the computer program, to enable a communication apparatus on which the chip is installed to perform the method according to any one of claims 1 to 16.

20. A computer program, wherein when the computer program is executed by the apparatus, the method according to any one of claims 1 to 16 is implemented.

21. A computer-readable storage medium, wherein the computer-readable storage medium stores a computer program, and when the computer program is run, the computer is enabled to perform the method according to any one of claims 1 to 16.

FIG. 1

FIG. 2

FIG. 3

400

| Sending device | | Receiving device |
|---|---|---|

S410: Generate a first multi-tone signal, where the first multi-tone signal includes N1 frequencies, and N1 is an integer greater than or equal to 2

S420: Send the first multi-tone signal

S430: Perform phase measurement on the first multi-tone signal

S440: Obtain first phase values that correspond to k antennas of a first device and that are at the N1 frequencies

S450: Determine an angle of a signal of the first device based on the obtained first phase values

FIG. 4

EP 4 549 986 A1

Frequency

Antenna 1    Antenna 2    ...    Antenna k

— — — — ·    — — — — ·    — — — — ·

Antenna 1    Antenna 2      Antenna k

- - - - - - - - - -    - - - - - - - - - -    ...    - - - - - - - - - -    Monophonic signal

Antenna 1    Antenna 2      Antenna k

f11    ———————    ———————    ———————

...

Antenna switching

t1    t2      tk

Time

FIG. 5

FIG. 6

Baseband multi-tone signal

f1    f2    f3    f4

0                    Frequency

FIG. 7

f1          f2          f3          f4

Digital LO    (LO)    (LO)    (LO)    (LO)

RF LO
fc          (LO)

FIG. 8

Baseband multi-tone
signal obtained through
RF down-conversion

f1          f2          f3          f4

0                    Frequency

f3 is digital down-
conversion of DC

f1–f3      f2–f3      0      f4–f3      Frequency

FIG. 9

FIG. 10

FIG. 11

FIG. 12

Angle determining apparatus 2000

Transceiver unit 2010

Processing unit 2020

FIG. 13

Angle determining apparatus 3000

Processor
3010

Memory
3030

Transceiver
3020

FIG. 14

| INTERNATIONAL SEARCH REPORT | International application No. |
|---|---|
| | PCT/SG2022/050546 |

**A. CLASSIFICATION OF SUBJECT MATTER**

*G01S 1/48 (2006.01)*    *H04B 7/04 (2017.01)*    *G01S 3/02 (2006.01)*

According to International Patent Classification (IPC)

**B. FIELDS SEARCHED**

Minimum documentation searched (classification system followed by classification symbols)

G01S; H04B

Documentation searched other than minimum documentation to the extent that such documents are included in the fields searched

Electronic data base consulted during the international search (name of data base and, where practicable, search terms used)

FAMPAT, IEEE, CNKI: multi, different, tone, frequency, carrier, signal, message, angle, viewpoint, point of view, determine, identify, detect, phase, measure, 多音, 多频率, 信号, 信息, 角度, 识别, 监测, 检测, 相位, 测量 and other related terms

**C. DOCUMENTS CONSIDERED TO BE RELEVANT**

| Category* | Citation of document, with indication, where appropriate, of the relevant passages | Relevant to claim No. |
|---|---|---|
| X | US 2020/0174093 A1 (ONO, Y. et al.), 04 June 2020, paragraphs [0041]-[0053] | 1-21 |
| X | US 2018/0038935 A1 (IIZUKA, K. et al.), 08 February 2018, paragraphs [0007]-[0021] and [0134] | 1-21 |

☒ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of the issuance of the international search report |
|---|---|
| 11 April 2023 | 11 April 2023 |

| Name and mailing address of the ISA/SG | Authorized officer |
|---|---|
| **Intellectual Property Office of Singapore** 1 Paya Lebar Link #11-03 PLQ 1, Paya Lebar Quarter Singapore 408533 E-mail: pct@ipos.gov.sg | HONG, Lei (Dr.) IPOS Telephone No. (+65) 6339 8616 |

Form PCT/ISA/210 (second sheet) (July 2022)

| | INTERNATIONAL SEARCH REPORT | International application No. |
|---|---|---|
| | | **PCT/SG2022/050546** |

**C (Continuation). DOCUMENTS CONSIDERED TO BE RELEVANT**

| Category* | Citation of document, with indication, where appropriate, of the relevant passages | Relevant to claim No. |
|---|---|---|
| X | CN 113454928 A (DENSO CORPORATION), 28 September 2021, paragraphs [0043]-[0079] | 1-21 |
| X | US 2020/0166598 A1 (DORN, C. et al.), 28 May 2020, paragraphs [0008]-[0031] and [0054] | 1-21 |
| X | CN 109952801 A (DEEYOOK LOCATION TECHNOLOGY LTD.), 28 June 2019, paragraphs [0036]-[0078] | 1-21 |
| A | CN 111416635 A (SHANGHAI GANWU COMMUNICATION TECHNOLOGY CO., LTD.), 14 July 2020, entire document, particularly paragraph [0048] | |
| A | CN 102017450 A (RAMBUS INC.), 13 April 2011, entire document | |
| A | US 2006/0262013 A1 (SHIROMA, G.S. et al.), 23 November 2006, entire document | |

Form PCT/ISA/210 (continuation of second sheet (1)) (July 2022)

## INTERNATIONAL SEARCH REPORT
Information on patent family members

| International application No. |
| --- |
| **PCT/SG2022/050546** |

*Note: related known patent family members of the patent documents referred to by this international search report are listed in this annex. This authority only provides information on the related patent family members, and assumes no responsibility for the details of the patents.*

| Patent Documents referred in the Report | Publication Date/Announcement Date (day/month/year) | Patent Family | Publication Date/Announcement Date (day/month/year) |
| --- | --- | --- | --- |
| US 2020/0174093 A1 | 04/06/2020 | GB 2573957 A | 20/11/2019 |
|  |  | KR 20190109518 A | 25/09/2019 |
|  |  | WO 2018/158876 A1 | 07/09/2018 |
|  |  | SG 11201907659P A | 27/09/2019 |
| US 2018/0038935 A1 | 08/02/2018 | KR 20170117585 A | 23/10/2017 |
|  |  | SG 11201707088Q A | 30/10/2017 |
|  |  | WO 2016/157613 A1 | 06/10/2016 |
|  |  | GB 2558030 A | 04/07/2018 |
|  |  | JP 2016194454 A | 17/11/2016 |
|  |  | HK 1254250 A1 | 12/07/2019 |
| CN 113454928 A | 28/09/2021 | US 2020/0264256 A1 | 20/08/2020 |
|  |  | US 2020/0264257 A1 | 20/08/2020 |
|  |  | WO 2020/172383 A1 | 27/08/2020 |
| US 2020/0166598 A1 | 28/05/2020 | PL 3660532 T3 | 23/01/2023 |
|  |  | EP 3660532 A1 | 03/06/2020 |
| CN 109952801 A | 28/06/2019 | EP 3516913 A1 | 31/07/2019 |
|  |  | US 9814051 B1 | 07/11/2017 |
|  |  | KR 20190065307 A | 11/06/2019 |
|  |  | WO 2018/055482 A1 | 29/03/2018 |
|  |  | JP 2020501164 A | 16/01/2020 |
| CN 111416635 A | 14/07/2020 | None | |
| CN 102017450 A | 13/04/2011 | US 2010/0259449 A1 | 14/10/2010 |
|  |  | JP 2011524093 A | 25/08/2011 |
|  |  | WO 2009/058473 A1 | 07/05/2009 |
|  |  | EP 2220786 A1 | 25/08/2010 |
| US 2006/0262013 A1 | 23/11/2006 | WO 2006/125081 A2 | 23/11/2006 |

Form PCT/ISA/210 (patent family annex) (July 2022)